# FASCICULE DE BREVET EUROPEEN

(11) **EP 3 538 432 B1**
(45) Date de publication et mention de la délivrance du brevet: **30.09.2020**
(21) Numéro de dépôt: 17804956.5
(22) Date de dépôt: 06.11.2017
(51) Int. Cl.: B63H 9/06

(54) **NAVIRE À PROPULSION VÉLIQUE**
SCHIFF MIT SEGELANTRIEB
SHIP WITH SAIL PROPULSION

(30) Priorité: 08.11.2016 FR 1670665
(43) Date de publication de la demande: 18.09.2019
(73) Titulaire: Marvin Series, 56000 Vannes (FR); Ayro, 75010 Paris (FR)
(72) Inventeur: VAN PETEGHEM, Marc, 75013 Paris (FR); SDEZ, Nicolas, 75012 Paris (FR)
(74) Mandataire: Le Forestier, Eric
(86) Numéro de dépôt international: PCT/IB2017/056927
(87) Numéro de publication internationale: WO 2018/087649

(56) Documents cités:
- EP-A1- 0 328 254
- FR-A1- 2 617 117
- US-A- 4 437 426
- US-A- 4 561 374
- US-A- 4 685 410
- US-A- 4 848 258

## Description

### Domaine de l'invention

La présente invention concerne d'une façon générale la propulsion vélique, et plus particulièrement un nouveau type d'aile de propulsion pour bateaux de croisière et navires de travail.

### Etat de la technique

La littérature antérieure concernant les ailes rigides pour la propulsion de natives est abondante.

Ainsi on connaît notamment par les documents US3332383A, US4685410A, US5313905A, US8635966B1 des ailes rigides ou semi-rigides à deux volets, permettant en particulier de donner une cambrure ajustable à l'aile.

Toutefois, ces ailes connues posent des problèmes importants lorsqu'il s'agit de réaliser une aile affalable, et en outre n'autorisent pas la prise de ris. Ainsi les ailes existantes à 2 volets présentent le plus souvent un mât haubané et le contrôle de l'aile est réalisé au moyen de bouts qui constituent d'une part une écoute qui vient forcer la cambrure de l'aile, d'autre part d'une tringlerie fixe qui va piloter le second volet de façon à lui faire atteindre tout ou partie de la cambrure à la base de l'aile, de façon à générer le cas échéant un vrillage. D'autre part, le mouvement relatif du second volet par rapport au premier volet est en général réalisé par rotation à partir d'un axe situé à l'intérieur du profil du premier volet, ce qui n'est pas optimal du point de vue des performances et rend la réalisation d'une aile affalable ou arrisable délicate voire impossible.

Par ailleurs Le document US 4 848 258 A décrit une voilure à trois voiles, avec trois mâts respectifs, les structures comportant les deux mâts extrémaux étant capables de tourner au niveau du mât central. La voilure comprend des éléments de portance qui s'apparentent davantage à des voiles qu'à des ailes. Les cornes et bômes avant et arrière sont capables de tourner de façon forcée autour d'un axe formé par le mât principal.

Le document EP 0 328 254 A1 décrit quant à lui une voile à aile double dans lequel l'aile arrière pivote autour d'un axe situé à l'intérieur du volume de l'aile avant.

On connaît également par le document US 4 561 374 A une voile qui s'apparente à une aile unique à cambrure variable. La structure portant cette aile pivote au niveau d'un mât unique qui traverse la partie arrière de l'aile et au niveau duquel s'effectue la cambrure.

### Résumé de l'invention

La présente invention vise proposer une aile à au moins deux volets qui pallie tout ou partie des inconvénients et limitations mentionnés ci-dessus et qui assure une grande efficacité aéraulique et une grande simplicité d'utilisation.

On propose à cet effet un navire à propulsion au moins partiellement vélique, du type comprenant une aile double montée sur une structure commandée angulairement autour d'un axe généralement vertical en fonction des conditions, l'aile double comprenant au moins un volet avant et un volet arrière dont au moins l'un présente une asymétrie avant-arrière et séparés par une fente, chaque volet comprenant une série d'éléments de forme répartis en hauteur, caractérisé en ce que ladite structure comprend un mât avant et un mât arrière reliés par un élément formant bôme et par un élément formant corne, en ce que les éléments de forme du volet avant sont traversés par le mât avant en pouvant tourner autour d'un axe défini par le ce dernier, en ce que les éléments de forme du volet arrière sont traversés par le mât arrière en pouvant tourner autour d'un axe défini par ce dernier, et en ce que ladite structure est capable de tourner sur un axe de rotation formé par le mât avant.

Le navire comprend optionnellement les caractéristiques additionnelles suivantes, prises individuellement ou en toutes combinaisons que l'homme du métier appréhendera comme étant techniquement compatibles :
* le volet avant est apte à se déplacer dans un intervalle angulaire défini de manière à se décaler angulairement par rapport à un plan médian (P) formé par les axes de rotation des deux volets.
* le volet avant est libre de se déplacer sous l'effet d'un vent sollicitant latéralement le volet avant.
* le navire comprend des moyens de commande du déplacement angulaire du volet avant.
* l'intervalle angulaire est compris entre environ ±1° et ±15°.
* le navire comprend des moyens de commande de l'inclinaison du volet arrière par rapport audit plan médian.
* les moyens de commande sont aptes à incliner de façon différenciée une région inférieure et une région supérieure du volet arrière.
* les moyens de commande sont également aptes à déplacer au moins une région intermédiaire du volet arrière.
* les moyens de commande comprennent un premier actionneur agissant au niveau d'une région inférieure du volet arrière et un second actionneur situé dans la région inférieure de l'aile et agissant au niveau d'une région supérieure du volet arrière par un mécanisme de renvoi circulant dans l'un des mâts.
* le navire comprend au moins un troisième actionneur agissant au niveau d'une région intermédiaire du volet arrière par un mécanisme de renvoi circulant dans un mât de la structure.
* les actionneurs sont montés sur l'élément formant bôme.
* l'élément formant corne appartient à un ensemble formant corne comprenant ledit élément formant corne et un élément capable de coulisser le long d'au moins un mât et solidaire en translation de l'extrémité supérieure du volet avant et /ou de l'extrémité supérieure du volet arrière, pour réaliser au moins l'un parmi un affalage et un arrisage du volet avant et/ou du volet arrière.
* le navire comprend au moins une drisse possédant un renvoi au niveau de l'élément fixe de la corne et attachée audit élément coulissant de l'ensemble formant corne.
* le navire comprend des moyens de commande angulaire agissant dans une région de pied du mât avant.
* ladite structure est non haubanée et est capable de tourner sur 360° en réponse auxdits moyens de commande angulaire.
* la commande angulaire de la structure opère conjointement sur les éléments fixe et coulissant de l'ensemble formant corne.
* le mécanisme de renvoi associé au deuxième actionneur comprend des éléments de renvoi montés sur l'élément coulissant de l'ensemble formant corne.
* au moins l'un des volets est réalisé à l'aide d'un ensemble d'éléments de forme de contours profilés, sur lesquels une enveloppe est tendue.
* au moins l'un des volets est réalisé à l'aide d'un ensemble de caissons généralement rigides ou semi-rigides coopérant les uns avec les autres de façon téléscopique.

### Brève description des dessins

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
- la Figure 1 est une vue en perspective d'ensemble d'une aile de propulsion vélique selon une première forme de réalisation de l'invention,
- la Figure 2 est une vue en coupe horizontale schématique de l'aile de la Figure 1,
- les Figures 3A à 3D sont des vues en coupe horizontale illustrant l'état de l'aile dans quatre situations différentes,
- la Figure 4 est une vue en perspective de dessous de l'ensemble de la structure de l'aile à l'exception de son enveloppe,
- la Figure 5 est une vue en perspective de dessus de l'ensemble de la Figure 4,
- la Figure 5a est une vue en perspective de dessus à échelle agrandie d'un détail de la Figure 5,
- la Figure 6 est une vue en élévation de côté d'une région supérieure de l'ensemble des Figures 4 et 5,
- la Figure 7 est une vue en perspective de dessus de la région illustrée sur la Figure 6,
- la Figure 8 est une vue en perspective d'un détail d'un élément de la structure de l'aile,
- la Figure 9 est une vue en perspective de dessous à échelle agrandie d'une région inférieure de l'ensemble des Figures 4 et 5,
- la Figure 10 est une vue en perspective plongeante, dans l'axe, à échelle agrandie, de la région de la Figure 9,
- la Figure 11 est une vue en perspective à échelle agrandie de la région des Figures 6 et 7,
- la Figure 12 est une vue en perspective schématique d'une aile selon une deuxième forme de réalisation de l'invention,
- la Figure 13 est une vue en perspective d'un élément de structure de l'aile de la Figure 12, et
- la Figure 14 est une vue schématique en élévation de côté de l'aile de la Figure 12.

### Description détaillée de formes de réalisation préférées

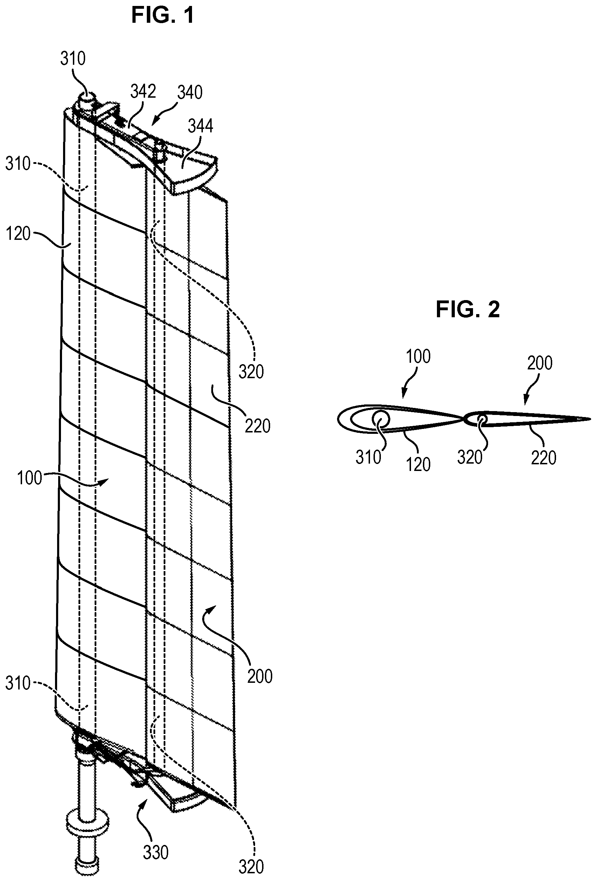

En référence tout d'abord aux Figures 1 à 11, on va décrire une première forme de réalisation de l'invention.

### a) Principes généraux

En référence aux figures 1, 2 et 3A à 3D, une aile selon cette forme de réalisation comprend deux profils aérodynamiques réglables tous deux en incidence et dont l'angle de calage relatif est réglable. On les dénomme dans la suite premier volet ou volet avant, et second volet ou volet arrière. Ils sont désignés par les références 100 et 200, respectivement. Ils pivotent sur des axes définis par deux mâts 310, 320 comme on va le voir dans la suite.

Au moins l'un de ces profils présente une section transversale aérodynamique asymétrique dans la direction avant-arrière (avec bord d'attaque et bord de fuite). Il peut s'agir par exemple de sections dites en aile d'avion symétriques, et plus préférentiellement des sections normalisées NACA 00xx ou autres.

L'angle relatif du second volet par rapport au premier volet est réglable de façon différentielle suivant la hauteur, permettant ainsi un vrillage du second volet.

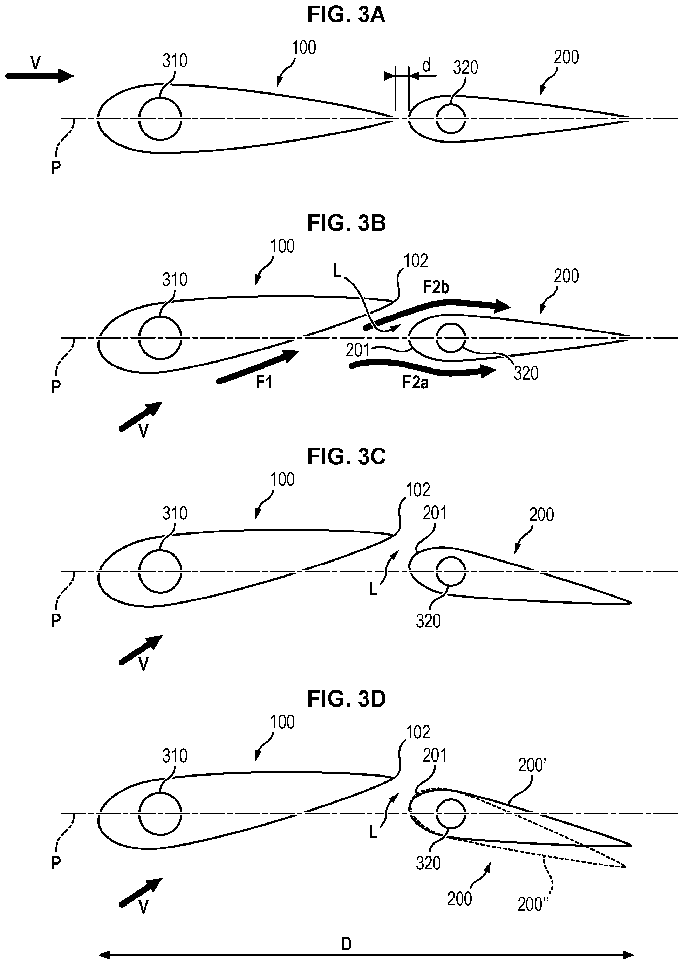

Les Figures 3A à 3D illustrent schématiquement différentes positions pouvant être prises par les deux volets.

Le premier volet 100 présente dans le présent exemple un degré de liberté déterminé en pivotement par rapport à un plan longitudinal P de l'aile (défini par une structure d'aile qu'on décrira dans la suite), tandis que le second volet 200 peut être sollicité, à l'aide d'un système d'écoute, de vérin ou tout autre système, de manière à prendre une inclinaison par rapport à l'aile avant.

La Figure 3A illustre une position de l'aile vent debout (flèche F), le volet arrière 200 étant amené dans sa position médiane. Le volet avant 100 s'oriente spontanément selon l'axe du vent, et le volet arrière est ici aligné avec lui.

Sur la Figure 3B, le volet arrière est toujours maintenu en position médiane par rapport au plan de symétrie structurel P de l'aile, mais le vent vient de bâbord. Le volet avant 100 est sollicité par le vent pour tourner dans un sens antihoraire (en vue de dessus) par rapport au plan P venir en position angulaire de butée comme illustré. Dans cette position, l'écoulement d'air (flux F1) le long de l'intrados du volet avant (face du volet située au vent) se divise, au niveau de la transition entre le volet avant et le volet arrière, entre un flux intérieur F2a côté intrados du volet arrière et un flux F2b côté extrados, qui se propage à travers une lumière ou fente verticale L définie entre le bord arrière 102 du volet avant 100 et le bord avant 201 du volet arrière 200. Ainsi, d'une manière particulièrement simple et sans avoir à structurer de façon spécifique le volet avant ou le volet arrière, on permet à l'aile à deux volets selon l'invention de bénéficier de l'effet de fente et d'améliorer son rendement aérodynamique.

Sur la Figure 3C, le vent présente la même orientation que sur la Figure 3B, mais le volet arrière a été sollicité pour présenter une inclinaison vers le vent par rapport au plan P de l'aile.

Dans cette configuration, on obtient un effet similaire à celui du creusement (ou cambrure) d'une voile souple.

Enfin sur la Figure 3D, on observe que le volet arrière 200 présente, grâce à une commande de torsion (« twist » en terminologie anglo-saxonne) que l'on décrira en détail dans la suite, une différence entre l'inclinaison de sa région inférieure 200' par rapport au plan P et l'inclinaison de sa région supérieure 200" par rapport au même plan P. Cette torsion permet d'assurer une cambrure variable de l'aile, propice à l'amélioration de sa performance. Plus précisément, cette variation permet de générer une torsion (« twist » dans le jargon de la voile) aérodynamique de l'aile (variation de l'angle de portance nulle le long de l'envergure) de manière à, soit s'adapter au gradient de vent, soit à décharger le haut de l'aile, voire même à générer une cambrure inverse, de façon à gagner en moment de redressement.

Naturellement, avec un vent de tribord, les phénomènes inverses peuvent être obtenus.

Selon une variante de réalisation, le volet avant 100 n'est pas libre, mais peut être piloté de façon à adopter un comportement similaire à celui illustré sur les Figures 3A à 3D.

Selon le profil et plus généralement des dimensions transversales du volet avant 100 et du volet arrière 200, l'intervalle angulaire dans lequel le volet avant 100 est libre de se déplacer (librement ou de façon commandée) est typiquement compris entre ±1° et ±15°.

### b) Structure

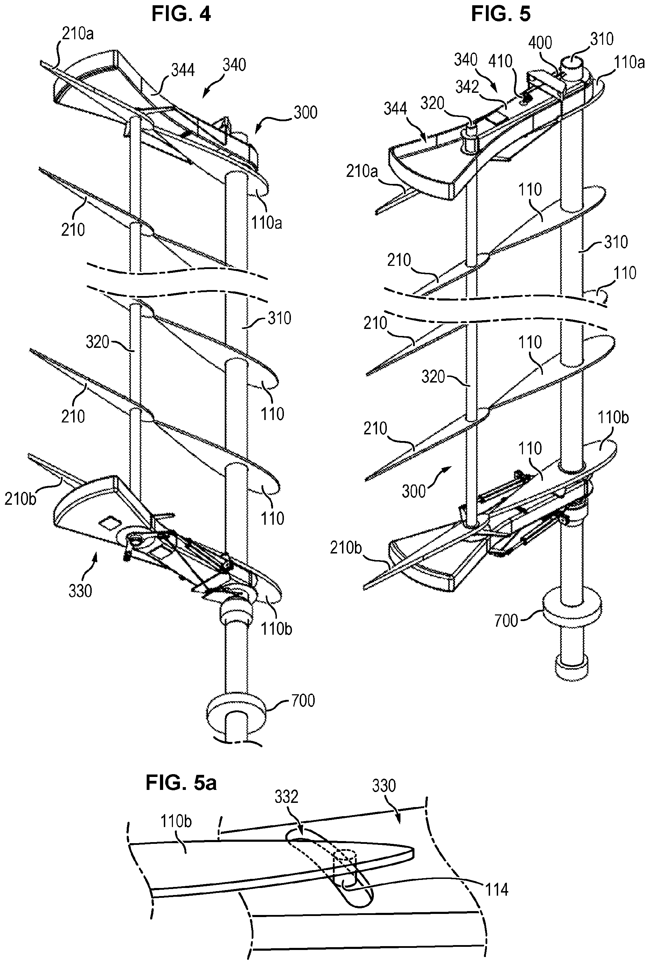

En référence aux Figures 4 à 11, on va maintenant décrire en détail la structure de l'aile selon cette première forme de réalisation.

L'aile comprend un cadre rigide 300 formé par les deux mâts cylindriques 310, 320, ici de diamètre extérieur constant, reliés rigidement entre eux par des éléments structurels transversaux respectivement inférieur et supérieur 330, 340, formant respectivement un élément de bôme et un élément de corne. Ce cadre structurel est libre de tourner sur lui-même par rapport au bâti au moyen de paliers liant ce dernier au mât principal. Les éléments de ce cadre structurel sont formés de pièces par exemple en métal ou en matériau composite, dimensionnées de façon appropriée en fonction des contraintes.

On notera ici que dans la présente forme de réalisation, le mat avant 310 est autoporté, c'est-à-dire non haubané, mais on peut bien entendu prévoir qu'il soit équipé de tout ou partie des élément suivants : haubans, étai, bastaques, avec points d'attache en sommet de mât au-dessus de la structure de volets.

Dans le présent exemple, l'épaisseur du volet arrière 200 étant plus petite que celle du volet avant 100, le mât arrière 320 peut présenter un diamètre plus petit que celui du mât avant 310.

Sur le mât avant et sur le mât arrière sont montés respectivement une série d'éléments de forme avant 110 et une série (de préférence de même nombre) d'éléments de forme arrières 210 qui décrivent conjointement une enveloppe de profils aérodynamiques symétriques destinés à former, en coopération avec des enveloppes respectives 120, 220 (non représentés sur les Figures 4 à 7), les premier et second volets 100, 200. Ces enveloppes 120, 220 sont réalisées par exemple sous la forme d'entoilages tendus sur les éléments de forme respectifs. On peut notamment utiliser une toile aéronautique ou un tissu du type de celui utilisés pour les voiles traditionnelles, mis en tension lors du hissage.

Les éléments de forme 110, 210 sont libres en rotation et en translation sur leur mat respectif 310, 320. Ces deux degrés de liberté sont assurés par exemple à l'aide de paliers lisses ou à roulement (non représentés sur les Figures 4 à 7), destinés à autoriser ces mouvements avec frottements réduits, en évitant les risques de coincement.

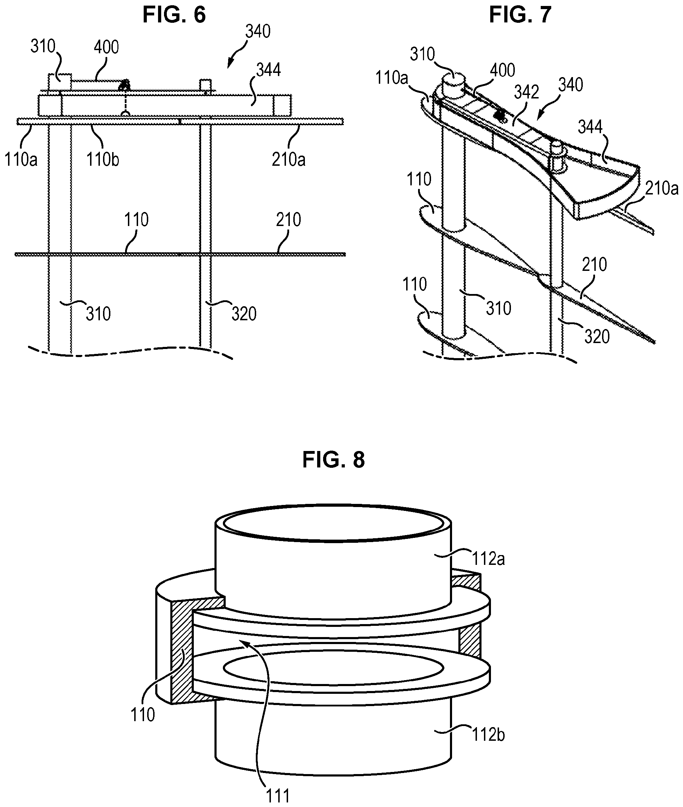

Dans l'exemple particulier illustré sur la Figure 8, ces paliers comprennent deux éléments de palier, respectivement 112a, 112b, encastrés dans la région supérieure et dans la région inférieure d'un élément de forme 110 en entourant une ouverture 111 formée dans ledit élément de forme pour laisser passer le mât associé 310.

D'une façon générale, la hauteur des éléments de guidage est choisie pour minimiser les frottements et les risques de coincement, tout en donnant à l'aile une fois affalée le caractère le plus compact possible.

La translation des éléments de forme le long de leur mât respectif permet d'assurer le hissage et l'affalage des deux ailes comme on le verra dans la suite, ainsi que la prise de ris ou arrisage.

Le déplacement vertical des éléments de forme 110, 210 et de leur enveloppe respective 120, 220 est réalisé de façon identique sur les deux mâts en réalisant la partie formant corne 340 sous forme d'un élément fixe 342, rigidement solidaire des mâts 310, 320, et d'un élément 344 formant ascenseur capable de coulisser le long des mâts et à la laquelle sont solidarisés avec liberté de rotation les axes des éléments de forme les plus hauts (110a, 210a) de l'aile avant 100 et de l'aile arrière 200, cet élément coulissant 344 étant susceptible d'être hissée et abaissée à l'aide d'une drisse 400, entraînant de ce fait chaque enveloppe et, progressivement, chaque élément de forme respectivement 110, 210. Cette liaison avec liberté de rotation entre les éléments de forme 110a, 210a et la pièce 344 assure la solidarisation en translation de l'extrémité supérieure des volets avec ladite pièce tout en autorisant la liberté de mouvement du volet avant 100 par rapport à la corne 340 dans des limites angulaires définies, comme décrit dans ce qui précède, et la liberté de mouvement du volet arrière 200 sollicitée en inclinaison par des moyens que l'on décrira plus loin.

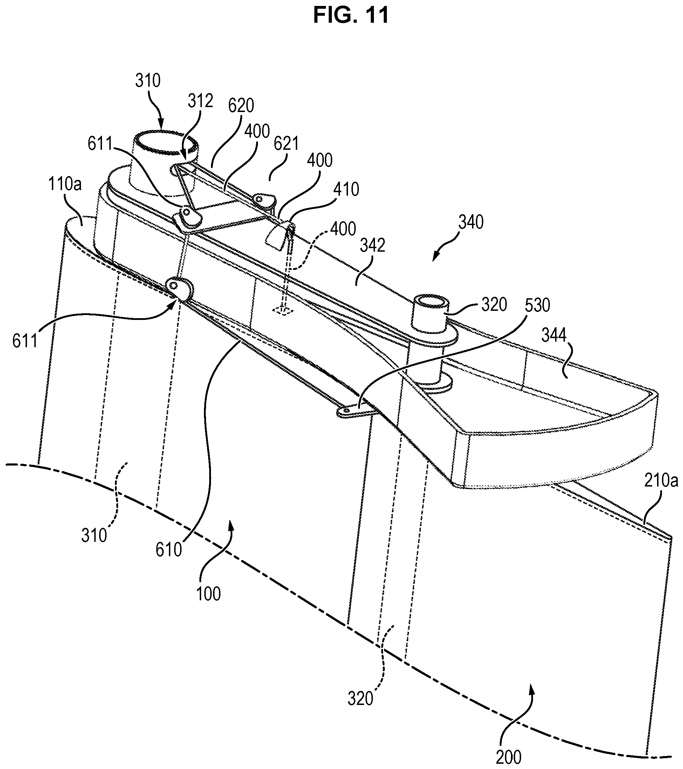

Dans la présente forme de réalisation, la drisse 400 est guidée par un ensemble de poulies de renvoi (dont une poulie 410 sur le dessus de l'élément fixe 342 de l'ensemble formant corne 340) et traverse une ouverture formée dans la région centrale de la partie fixe 342 de la corne 340, pour être accrochée dans la région centrale de la pièce coulissante 344. A partir de la région supérieure de l'aile, la drisse 400 circule vers le bas à l'intérieur du mât avant 310 en y pénétrant via une ouverture 312 (voir Figure 11). L'extrémité inférieure de la drisse (non visible) peut être manipulée manuellement ou, pour les ailes de plus grandes dimensions à l'aide d'un moteur (non représenté).

Selon les commandes appliquées à ce moteur, on peut réaliser le hissage de l'aile sur la totalité de son étendue verticale, et son affalage, ainsi que l'arrisage, en positionnant la pièce coulissante 344 à une certaine hauteur au-dessous de sa hauteur maximale

On va maintenant décrire en détail la façon dont le mouvement de rotation des éléments de forme, et par là des volets dont ils constituent l'ossature, est réalisée.

Dans le présent exemple, le volet avant 100 présente comme on l'a dit un certain degré de liberté angulaire autour de son mât 310. On a vu toutefois que dans une autre forme de réalisation, il pouvait être contrôlé par une écoute ou autre commande.

L'emplacement du mât 310 en avant par rapport au centre de poussée aérodynamique du volet 100, quelle que soit l'incidence du vent, est tel que le volet vient se caler sur une butée angulaire dans le sens horaire ou antihoraire (selon le côté de l'incidence du vent), comme illustré sur les Figures 3B, 3C et 3D.

Comme illustré sur la Figure 5a, on peut prévoir une butée angulaire inférieure en prévoyant au niveau de la surface supérieure de la bôme 330 une gorge 332 agencée sur un secteur circulaire et dans laquelle est engagé un doigt 114 faisant saillie avec le bas à partir de l'élément de forme le plus bas 110b du volet avant 100.

Un aménagement semblable peut être prévu entre l'élément de forme le plus haut 110a du volet avant et la face inférieure de l'élément coulissant 344 de la corne 340.

Alternativement, on peut prévoir de limiter le débattement angulaire de du volet avant 100 en agissant entre le mât 310 et l'élément de forme le plus bas 110b (respectivement l'élément de forme le plus haut 110a), ou encore à l'aide d'un bout attaché à une extrémité dans la région arrière de l'élément de forme le plus bas 110b et à l'autre extrémité sur la bôme 330. Un aménagement correspondant est dans ce cas prévu entre l'élément de forme le plus haut 110a et l'élément coulissant 344 de la corne 340.

On peut selon une autre variante prévoir un rail transversal solidaire de la bôme 330 et dans lequel peut glisser un chariot assujetti à la région arrière de l'élément de forme le plus bas 110b et prévoir une disposition équivalente (ou différente) dans la région supérieure de l'aile.

Comme on l'a indiqué plus haut, le volet arrière 200 présente un degré de liberté en rotation autour de son mât 320, mais sa position angulaire est pilotée au moins dans sa région inférieure, et de préférence également dans sa région supérieure pour pouvoir contrôler la torsion du volet.

On peut également prévoir de contrôler la position angulaire du volet 200 en une ou plusieurs positions à des hauteurs intermédiaires de celui-ci pour ainsi pouvoir ajuster localement sa cambrure.

Dans la présente forme de réalisation, le pilotage du volet arrière 200 est réalisé en assujettissant à l'aide d'un premier moyen de commande la position angulaire de son élément de forme le plus bas 210b, adjacent à la bôme 330, et en assujettissant à l'aide d'un deuxième moyen de commande la position angulaire de son élément de forme le plus haut 210a, adjacent à l'élément coulissant 344 de la corne, par rapport à cette dernière.

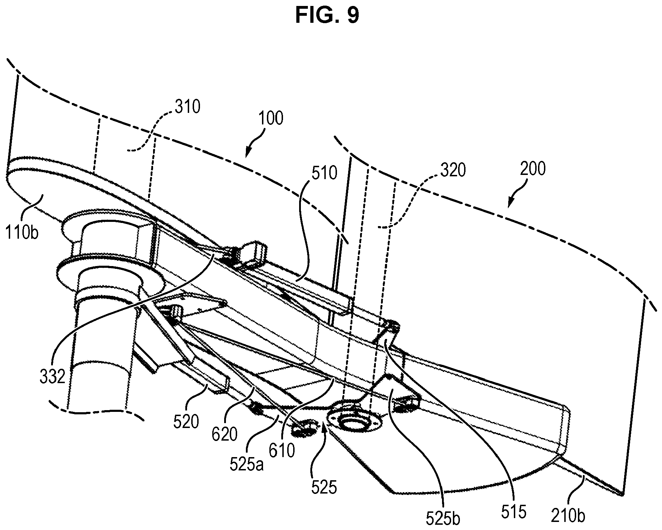

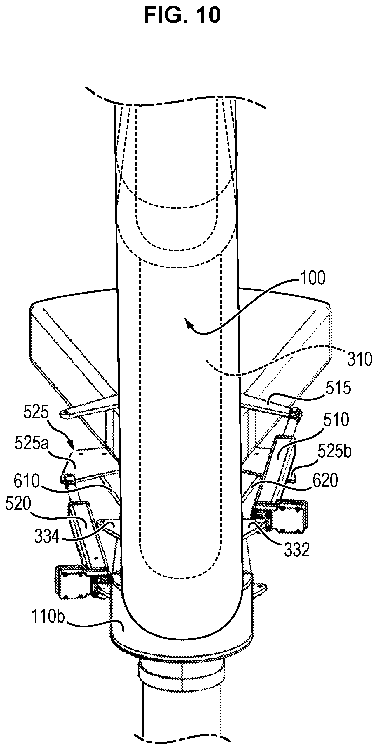

Au niveau de la bôme 330, et comme illustré en particulier sur les Figures 9 et 10, le pilotage de la position angulaire de l'élément de forme 210b est réalisé ici à l'aide d'un vérin 510 dont le corps de vérin est monté avec une liberté de rotation dans le plan horizontal sur une platine 332 solidaire de la bôme 330 et dont la tige est reliée de façon articulée à l'extrémité libre d'une biellette 515 montée autour du mât 320 immédiatement au-dessus de l'élément de bôme 330 et qui est solidaire en rotation de l'élément de forme 210b.

On comprend qu'en pilotant la longueur du vérin 510, on réalise le pilotage progressif de la position angulaire de la base du volet arrière, pour ainsi plus ou moins cambrer l'aile, d'un côté ou de l'autre, en fonction des conditions de vent et de navigation.

Pour piloter la région supérieure du volet arrière 200, on prévoit ici un deuxième vérin 520 disposé de façon généralement symétrique du premier vérin. Le corps de ce vérin est monté avec liberté de rotation sur une platine 334 disposée à l'opposé de la première platine 332. La tige du vérin 520 est montée de façon articulée sur un élément de renvoi 525 monté de façon pivotante sur l'extrémité inférieure du mât 320 immédiatement au-dessous de l'élément de bôme 330. Cet élément de renvoi 525 est réalisé d'un seul tenant et forme deux biellettes en opposition 525a, 525b agencées dans une direction généralement transversale par rapport à la bôme, la tige du vérin 520 étant reliée à l'extrémité libre de la première biellette 525a.

Deux bouts de renvoi 610, 620 sont attachés dans la région des extrémités libres respectives des deux biellettes 525a, 525b. Ces bouts, à l'aide de poulies de renvoi appropriées 611, 621, circulent à l'intérieur du mât avant 310 vers le haut de celui-ci, en ressortent par l'ouverture 312 prévue pour la drisse 400, et y sont reliés à un deuxième élément de renvoi 530 généralement identique à l'élément 525 et agencé entre l'élément coulissant 344 de la corne 340 et l'élément de forme le plus haut 210a, en étant solidaire en rotation dudit élément de forme.

De la sorte, il est possible de piloter à l'aide du vérin 520, à partir de la région de la bôme, la position angulaire de l'élément de forme le plus haut 210a de l'aile arrière 200, pour ainsi sélectivement créer une torsion de l'aile arrière et ainsi faire varier progressivement la cambrure de l'aile entre le volet avant 100 et le volet arrière 200, sur la hauteur de celle-ci.

Pour permettre au renvoi à l'aide des bouts 610, 620 quelle que soit la hauteur de l'élément coulissant 344 de la corne 340, c'est-à-dire y compris lors de la prise de ris, on prévoit un mécanisme d'ajustement de la longueur des bouts 610, 620 entre leurs points d'attache sur leurs éléments de renvoi respectifs 525, 530.

Dans le cas d'une aile légère, cet ajustement peut être effectué manuellement, par exemple au niveau de l'élément de renvoi inférieur 525, à l'aide de taquets coinceurs. Dans un système de plus grandes dimensions, on prévoit des actionneurs par exemple électriques permettant sélectivement de libérer et de retenir les bouts au niveau dudit élément de renvoi 525.

Par ailleurs, on peut remplacer les vérins 510, 520 par toute autre solution adaptée à la dimension du système d'aile. Notamment, pour des ailes dimensionnées pour les embarcations légères, on peut prévoir un système de bouts avec taquets coinceurs, le cas échéant sans les éléments de renvoi sus-décrits ou avec des éléments de renvoi ou des leviers agencés différemment.

Comme on l'a indiqué plus haut, l'ensemble formé par la structure rigide (mâts 310 et 320, élément de bôme 330 et élément fixe 342 de la corne 340) peut être ajusté angulairement (bordé/choqué) par rapport à l'axe du navire en faisant tourner le mât avant 310 sur lui-même.

Dans une première forme de réalisation, cette rotation peut être mise en œuvre au moyen d'un motoréducteur à arbre creux (non représenté) monté à la base du mât 310 coaxialement avec lui.

Dans une deuxième forme de réalisation, la commande peut être réalisée de façon déportée par rapport au mât à l'aide d'une transmission telle qu'une poulie 700 (éventuellement crantée) solidaire du mât 310 dans la région inférieure de celui-ci (voir Figures 4 et 5) et reliée à un mécanisme de commande (manuel, électrique, hydraulique, ...) via une courroie (non illustrée).

Enfin, notamment pour des embarcations de type dériveur léger ou petits bateaux de croisière, on peut prévoir simplement une écoute et un palan, de façon analogue au contrôle d'une grand-voile traditionnelle. L'attache est alors effectuée au niveau de la région arrière de l'élément de bôme 330.

Dans tous les cas, pour s'assurer que le cadre rigide constitué des deux mâts 310, 320, de l'élément de bôme 330 et de l'élément fixe 342 de la corne 340 tourne dans son ensemble lors de ce réglage angulaire, les éléments 330, 342 sont montés sur le mât avant 310 de façon à être solidaires en rotation de celui-ci.

En synthèse, on propose ainsi selon la présente invention une aile à double volet qui permet automatiquement (sans ajustement spécifique) de bénéficier d'un effet de fente entre le volet avant et le volet arrière.

En outre, une aile selon l'invention peut être rendue affable et arrisable de façon extrêmement simple, à l'aide d'une simple drisse commandée manuellement ou de façon motorisée.

D'une façon plus générale, l'opération de l'aile (orientation générale, cambrure, variation de la cambrure) peut être facilement pilotée au moyen d'actionneurs, et automatisée.

A cet égard, on peut associer à cette aile un certain nombre de capteurs et une centrale de calcul embarquée en vue de cette automatisation.

Notamment la société Harken, Pewaukee, Wisconsin, Etats-Unis d'Amérique, propose des systèmes de commande automatique de voilure qui peuvent être adaptés par l'homme du métier à une aile selon la présente invention.

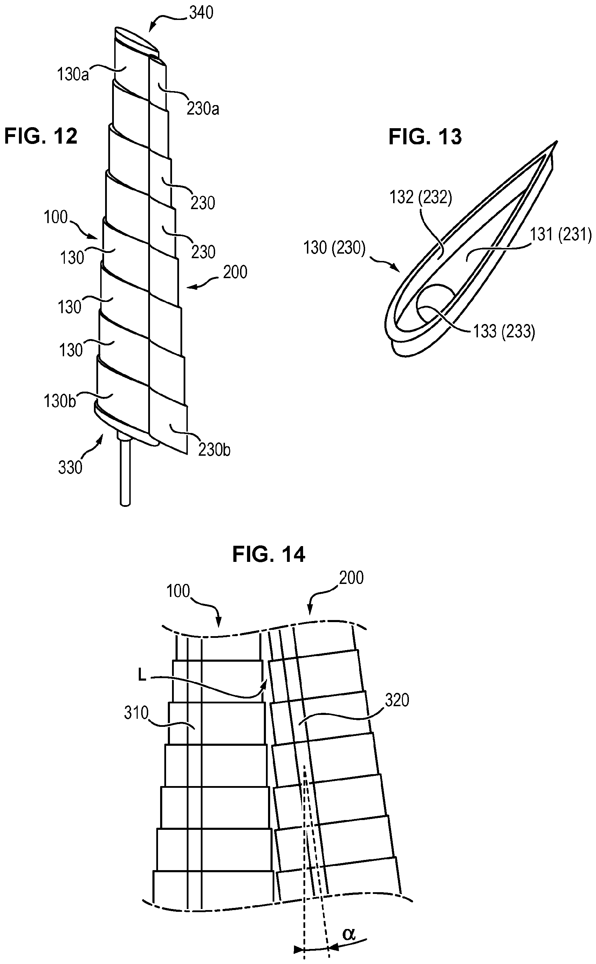

On va maintenant décrire en référence aux Figures 12 à 14 une deuxième forme de réalisation des volets d'une aile selon l'invention. Dans cette deuxième forme de réalisation, chaque volet 100, 200 est réalisé par emboîtement téléscopique d'une série d'éléments de forme de type caissons généralement rigides, respectivement 130, 230, présentant chacun (voir Figure 13) une section verticale en forme générale de « U » avec un fond (respectivement 131, 231) et une paroi périphérique montante (respectivement 132, 232), chaque élément étant légèrement plus petit que l'élément situé immédiatement en dessous de façon à pouvoir, en fonction des sollicitations appliquées, occuper par rapport à lui une position dégagée ou une position où il y est enfermé. D'autres sections verticales, autorisant l'emboîtement des éléments, peuvent être envisagées.

Les fonds 131 des éléments de forme 130 possèdent chacun un orifice 133 à travers lequel s'étend le mât avant 310. De la même manière, les fonds 231 des éléments de forme 230 possèdent chacun un orifice 233 à travers lequel s'étend le mât arrière 320. Ces orifices sont de préférence pourvus de bagues de guidage ou analogues, par exemple de manière semblable à ce qui est illustré sur la Figure 8 concernant les éléments de forme de la première forme de réalisation. De cette manière, les mâts 310, 320 servent de guides pour les caissons respectifs afin d'éviter qu'ils ne se coincent lors de leurs déplacements mutuels.

Par ailleurs, de façon non illustrée, deux caissons adjacents sont équipés de moyens de butée (brides, rebords, doigts ou autres) permettant d'éviter qu'un caisson de se trouve entièrement désolidarisé de l'autre.

Dans la région inférieure de l'aile, les caissons les plus bas 130a, 130b sont solidarisés en translation verticale à l'élément formant bôme 330 tandis que dans la région supérieure de l'aile, les caissons les plus hauts 130b, 230b sont solidarisés en translation verticale à l'élément coulissant de 344 de la corne 340.

De la sorte, le déplacement de l'élément coulissant 344 à l'aide de la drisse 400 permet de hisser l'aile, les caissons de l'aile avant et de l'aile arrière se déployant progressivement vers le haut au cours de ce hissage.

L'affalage s'effectue par les mouvements inverses, la hauteur totale de l'aile après affalage étant sensiblement égale à la hauteur d'un caisson.

De la même manière que précédemment, l'arrisage est possible, en amenant l'élément coulissant 344 à une hauteur intermédiaire au-dessus de la bôme 330.

La cambrure variable de l'aile, réalisée comme on l'a vu grâce à une torsion du volet arrière 200, peut être ici autorisée en réalisant les caissons en un matériau semi-rigide permettant un certain de degré de déformation élastique des caissons entre leur point bas et leur point haut. Alternativement ou en complément de cette disposition, on peut prévoir un certain jeu entre la base d'un caisson et l'extrémité supérieure ouverte du caisson situé immédiatement au-dessous.

Le caisson inférieur 130b du volet avant de préférence présente une liberté de mouvement dans un débattement angulaire déterminé, de la même manière sur l'élément de forme le plus bas 110b du volet avant 100 de la première forme de réalisation. Le caisson supérieur 130a du volet avant présente également cette liberté de la même manière que l'élément de forme le plus haut 110a du volet avant 100 de la première forme de réalisation.

De façon homologue, le caisson le plus bas 230b et le plus haut 230a du volet arrière 200 sont sollicités de la même manière que l'élément de forme le plus bas 210b et l'élément de forme le plus haut 210a, respectivement, du volet arrière 200 de la première forme de réalisation.

Comme illustré sur la Figure 14, le mât avant 310 et le mât arrière 320 présentent de préférence une légère inclinaison mutuelle pour maintenir entre le volet avant et le volet arrière une largeur de fente L généralement constante malgré la diminution progressive de la section transversale des volets (inhérente à leur structure téléscopique) du bas vers le haut.

Dans une autre forme de réalisation, on peut prévoir un mécanisme de translation horizontale des caissons sur une courte distance, une fois qu'ils ont été dégagés les uns des autres ou au cours d'une fin de course du mouvement de dégagement, afin d'aligner au moins approximativement ensemble les bords de fuite du volet avant et les bords d'attaque du volet arrière, pour ainsi garder une largeur de fente essentiellement constante.

Selon une autre forme de réalisation encore, on peut prévoir que les volets soient constitués d'une ou plusieurs enveloppes étanche à l'air et gonflables par sections ou globalement. Cette approche permet de rigidifier les ailes dans leur position d'utilisation. Les éléments de forme 110, 210 peuvent être adaptés en conséquence, par exemple en contraignant la section de l'aile respective par des membrures qui jouent alors le rôle d'éléments de forme. Pour un gonflage global, les éléments de forme ne sont alors pas étanches et sont conçus pour laisser passer l'air verticalement le long du volet.

Bien entendu, la présente invention n'est nullement limitée aux formes de réalisation décrites ci-dessus et illustrées sur les dessins, mais l'homme du métier saura y apporter de nombreuses variantes ou modifications.

En particulier, l'homme du métier pourra imaginer toute combinaison des différentes formes de réalisation et variantes décrites ici.

En outre, à partir des enseignements de la description qui précède, l'homme du métier saura réaliser selon les mêmes principes une aile possédant trois volets ou davantage.

Selon une autre variante, on peut prévoir que chaque volet ou l'un des volets (typiquement le volet arrière) soit réalisé en plusieurs parties de manière à ce que le décalage angulaire de chaque partie par rapport à celles attenantes permettant de réaliser un vrillage notamment au niveau du volet arrière.

Par ailleurs, une aile à deux volets selon l'invention peut avantageusement équiper tout type d'embarcation : bateaux de plaisance, dériveurs ou multicoques légers, bateaux de course, navires de transport de marchandises pour réaliser des économies de carburant, navires de croisière à propulsion mixte motorisée et vélique, etc.

## Revendications

1. Navire à propulsion au moins partiellement vélique, du type comprenant une aile double montée sur une structure (300) commandée angulairement autour d'un axe généralement vertical (310) en fonction des conditions, l'aile double comprenant un volet avant (100) et un volet arrière (200) dont au moins l'un présente une asymétrie avant-arrière et séparés par une fente (L), chaque volet comprenant une série d'éléments de forme (110 ,210 ; 130 ; 230) répartis en hauteur, **caractérisé en ce que** ladite structure comprend un mât avant (310) et un mât arrière (320) reliés par un élément formant bôme (330) et par un élément formant corne (342), **en ce que** les éléments de forme (110 ; 130) du volet avant (100) sont traversés par le mât avant (310) en pouvant tourner autour d'un axe défini par ce dernier, **en ce que** les éléments de forme (210 ; 230) du volet arrière (200) sont traversés par le mât arrière (320) en pouvant tourner autour d'un axe défini par ce dernier, et **en ce que** ladite structure (300) est capable de tourner sur un axe de rotation formé par le mât avant (310).

2. Navire selon la revendication 1, **caractérisé en ce que** le volet avant (100) est apte à se déplacer dans un intervalle angulaire défini de manière à se décaler angulairement par rapport à un plan médian (P) formé par les axes de rotation des deux volets.

3. Navire selon la revendication 2, **caractérisé en ce que** le volet avant (100) est libre de se déplacer sous l'effet d'un vent sollicitant latéralement le volet avant.

4. Navire selon la revendication 2, **caractérisé en ce qu'**il comprend des moyens de commande du déplacement angulaire du volet avant (100).

5. Navire selon l'une des revendications 2 à 4, **caractérisé en ce que** l'intervalle angulaire est compris entre environ ±1° et ±15°.

6. Navire selon l'une des revendications 2 à 5, **caractérisé en ce qu'**il comprend des moyens (510, 515, 520, 525, 530, 610, 620) de commande de l'inclinaison du volet arrière (200) par rapport audit plan médian.

7. Navire selon la revendication 6, **caractérisé en ce que** les moyens de commande (510, 515, 520, 525, 530, 610, 620) sont aptes à incliner de façon différenciée une région inférieure (210b) et une région supérieure (210a) du volet arrière (200).

8. Navire selon la revendication 7, **caractérisé en ce que** les moyens de commande sont également aptes à déplacer au moins une région intermédiaire du volet arrière (200).

9. Navire selon la revendication 7 ou 8, **caractérisé en ce que** les moyens de commande comprennent un premier actionneur (510) agissant au niveau d'une région inférieure (210b) du volet arrière et un second actionneur (520) situé dans la région inférieure de l'aile et agissant au niveau d'une région supérieure (210a) du volet arrière par un mécanisme de renvoi (525, 530, 610, 620) circulant dans l'un (310) des mâts.

10. Navire selon les revendications 8 et 9 prises en combinaison, **caractérisé en ce qu'**il comprend au moins un troisième actionneur agissant au niveau d'une région intermédiaire du volet arrière par un mécanisme de renvoi circulant dans un mât de la structure.

11. Navire selon l'une des revendications 1 à 10, **caractérisé en ce que** l'élément formant corne (342) appartient à un ensemble formant corne (340) comprenant ledit élément formant corne (342) et un élément (344) capable de coulisser le long d'au moins un mât et solidaire en translation de l'extrémité supérieure du volet avant et /ou de l'extrémité supérieure du volet arrière, pour réaliser au moins l'un parmi un affalage et un arrisage du volet avant et/ou du volet arrière.

12. Navire selon la revendication 11, **caractérisé en ce qu'**il comprend au moins une drisse (400) possédant un renvoi (410) au niveau de l'élément fixe (342) de la corne (340) et attachée audit élément coulissant (344) de l'ensemble formant corne.

13. Navire selon l'une des revendications 1 à 12, **caractérisé en ce qu'**il comprend des moyens de commande angulaire (700) agissant dans une région de pied du mât avant, ladite structure étant non haubanée et étant capable de tourner sur 360° en réponse auxdits moyens de commande angulaire.

14. Navire selon l'une des revendications 1 à 13, **caractérisé en ce que** au moins l'un des volets (100, 200) est réalisé à l'aide d'un ensemble d'éléments de forme de contours profilés (110, 210), sur lesquels une enveloppe (120, 220) est tendue.

15. Navire selon l'une des revendications 1 à 14, **caractérisé en ce que** au moins l'un des volets (100, 200) est réalisé à l'aide d'un ensemble d'éléments de forme de type caissons (130, 230) généralement rigides ou semi-rigides coopérant les uns avec les autres de façon téléscopique.

## Patentansprüche

1. Schiff mit wenigstens teilweisem Segelantrieb des Typs mit einem Doppelflügel, der auf einer Struktur (300) angebracht ist, die um eine im wesentlichen vertikale Achse (310) abhängig von den Bedingungen winkelgesteuert ist, wobei der Doppelflügel eine vordere Flügelklappe (100) und eine hintere Flügelklappe (200) aufweist, von denen mindestens eine Vorne-Hinten-Asymmetrie aufweist und die durch einen Schlitz (L) getrennt sind, und jede Flügelklappe eine Reihe von über die Höhe verteilten Formelementen (110, 210; 130) aufweist, **dadurch gekennzeichnet, dass** die Struktur einen vorderen Mast (310) und einen hinteren Mast (320) umfasst, die durch ein einen Baum (330) bildendes Element und durch ein Horn (342) bildendes Element verbunden sind, dass die Formelemente (110; 130) der vorderen Flügelklappe (100) von dem vorderen Mast (310) durchquert und um eine von diesem definierte Achse drehbar sind, dass die Formelemente (210; 230) der hinteren Flügelklappe (200) von dem hinteren Mast (320) durchquert und um eine von diesem definierte Achse drehbar sind, und dass die Struktur (300) um eine durch den vorderen Mast (310) gebildete Drehachse drehbar ist.

2. Schiff nach Anspruch 1, **dadurch gekennzeichnet, dass** die vordere Flügelklappe (100) in der Lage ist, sich innerhalb eines bestimmten Winkelintervalls winkelversetzt zu einer durch die Drehachsen der beiden Flügelklappen gebildeten Mittelebene (P) zu bewegen.

3. Schiff nach Anspruch 2, **dadurch gekennzeichnet, dass** die vordere Flügelklappe (100) unter der Wirkung eines seitlich auf die vordere Flügelklappe einwirkenden Windes frei beweglich ist.

4. Schiff nach Anspruch 2, **dadurch gekennzeichnet, dass** es Mittel zur Steuerung der Winkelverschiebung der vorderen Flügelklappe (100) aufweist.

5. Schiff nach einem der Ansprüche 2 bis 4, **dadurch gekennzeichnet, dass** das Winkelintervall zwischen etwa ±1° und ±15° liegt.

6. Schiff nach einem der Ansprüche 2 bis 5, **dadurch gekennzeichnet, dass** es Steuermittel (510, 515, 520, 525, 530, 610, 620) zur Steuerung der Neigung der hinteren Flügelklappe (200) in Bezug auf die Mittelebene aufweist.

7. Schiff nach Anspruch 6, **dadurch gekennzeichnet, dass** die Steuermittel (510, 515, 520, 525, 530, 610, 620) in der Lage sind, einen unteren Bereich (210b) und einen oberen Bereich (210a) der hinteren Flügelklappe (200) differenziert zu kippen.

8. Schiff nach Anspruch 7, **dadurch gekennzeichnet, dass** die Steuermittel auch in der Lage sind, mindestens einen Zwischenbereich der hinteren Flügelklappe (200) zu bewegen.

9. Schiff nach Anspruch 7 oder 8, **dadurch gekennzeichnet, dass** die Steuermittel einen in einem unteren Bereich (210b) der hinteren Flügelklappe wirkenden ersten Aktuator (510) und einen zweiten Aktuator (520) umfassen, der in dem unteren Bereich des Flügels angeordnet ist und durch einen in einem (310) der Masten verlaufenden Übertragungsmechanismus (525, 530, 610, 620) in einem oberen Bereich (210a) der hinteren Flügelklappe wirkt.

10. Schiff nach den Ansprüchen 8 und 9 in Kombination, **dadurch gekennzeichnet, dass** es mindestens einen dritten Aktuator aufweist, der in einem Zwischenbereich der hinteren Flügelklappe durch einen in einem Mast der Struktur verlaufenden Übertragungsmechanismus wirkt.

11. Schiff nach einem der Ansprüche 1 bis 10, **dadurch gekennzeichnet, dass** das Horn-bildende Element (342) zu einer Horn-bildenden Anordnung (340) gehört, die das Horn-bildende Element (342) und ein Element (344) umfasst, das entlang mindestens eines Mastes gleiten kann und in Translation fest mit dem oberen Ende der vorderen Flügelklappe und/oder dem oberen Ende der hinteren Flügelklappe verbunden ist, um entweder ein Absenken und/oder ein Arretieren der vorderen Flügelklappe und/oder der hinteren Flügelklappe zu erreichen.

12. Schiff nach Anspruch 11, **dadurch gekennzeichnet, dass** es mindestens ein an dem Gleitstück (344) der Horn-bildenden Anordnung befestigtes Fall (400) mit einer Umlenkung (410) an dem festen Element (342) des Horns (340) umfasst.

13. Schiff nach einem der Ansprüche 1 bis 12, **dadurch gekennzeichnet, dass** es Winkelsteuermittel (700) umfasst, die in einem Fußbereich des vorderen Mastes wirken, wobei die Struktur nicht abgespannt bzw. verankert ist und in der Lage ist, sich in Reaktion auf die Winkelsteuermittel um 360° zu drehen.

14. Schiff nach einem der Ansprüche 1 bis 13, **dadurch gekennzeichnet, dass** mindestens eine der Flügelklappen (100, 200) mittels eines Satzes von profilierten Konturelementen (110, 210) gebildet ist, auf die eine Umhüllung (120, 220) aufgespannt ist.

15. Schiff nach einem der Ansprüche 1 bis 14, **dadurch gekennzeichnet, dass** mindestens eine der Flügelklappen (100, 200) mit Hilfe eines Satzes von im wesentlichen starren oder halbstarren kastenförmigen Elementen (130, 230) hergestellt ist, die miteinander teleskopartig zusammenwirken.

## Claims

1. An at least partially wind-propelled ship, of the type comprising a double airfoil mounted on a structure (300) controlled angularly around a generally vertical axis (310) depending on conditions, the double airfoil comprising a fore flap (100) and an aft flap (200) at least one of which has a fore-to-aft asymmetry and separated by a slit (L), where each flap comprising a series of shape elements (110, 210; 130, 230) distributed in height, **characterized in that** said structure comprises a fore mast (310) and an aft mast (320) connected by a boom-forming member (330) and by a gaff-forming member (342), **in that** the shape elements (110; 130) of the fore flap (100) are traversed by the fore mast (310) while being capable of turning around an axis defined by the latter, **in that** the shape elements (210; 230) of the aft flap (200) are traversed by the aft mast (320) while being capable of turning around an axis defined by the latter, and **in that** said structure (300) is capable of turning on an axis of rotation formed by the fore mast (310).

2. The ship according to claim 1, **characterized in that** the fore flap (100) is capable of being displaced over a defined angular interval so as to become angularly offset relative to a median plane (P) formed by the axes of rotation of the two flaps.

3. The ship according to claim 2, **characterized in that** fore flap (100) is capable of being displaced under the effect of a wind laterally urging the fore flap.

4. The ship according to claim 2, **characterized in that** it comprises means for controlling the angular displacement of the fore flap (100).

5. The ship according to any one of claims 2 to 4, **characterized in that** the angular interval is included between about ± 1° and ± 15°.

6. The ship according to one of claims 2 to 5, **characterized in that** it comprises means (510, 515, 520, 525, 530, 610, 620) for controlling the inclination of the aft flap (200) relative to said median plane.

7. The ship according to claim 6, **characterized in that** the control means (510, 515, 520, 525, 530, 610, 620) are capable to distinctly incline a lower region (210b) and an upper region (210a) of the aft flap (200).

8. The ship according to claim 7, **characterized in that** the control means are also capable of displacing at least one intermediate region of the aft flap (200).

9. The ship according to claim 7 or 8, **characterized in that** the control means comprise a first actuator (510) acting at a lower region (210b) of the aft flap and a second actuator (520) located in the lower region of the airfoil and acting at an upper region (210a) of the aft flap via a transfer mechanism (525, 530, 610, 620) passing through one (310) of the masts.

10. The ship according to claims 8 and 9 taken in combination, **characterized in that** it comprises at least a third actuator acting at an intermediate region of the aft flap via a transfer mechanism passing through a mast of the structure.

11. The ship according to any one of claims 1 to 10, **characterized in that** the gaff-forming member (342) belongs to a gaff forming assembly (340) comprising said gaff forming member (342) and a member (344) capable of sliding along the at least one mast and secured in translation with the upper end of the fore flap and/or the upper end of the aft flap, in order to perform at least one among a hauling down and a reefing of the fore flap and/or aft flap.

12. The ship according to claim 11, **characterized in that** it comprises at least one halyard (400) having a transfer (410) at the fixed member (342) of the gaff (340) and attached to said sliding member (344) of the gaff forming assembly.

13. The ship according to any one of claims 1 to 12, **characterized in that** it comprises angular control means (700) acting in a region of the foot of the fore mast, said structure being not shrouded and being capable of turning through 360° in response to said angular control means.

14. The ship according to any one of claims 1 to 13, **characterized in that** at least one of the flaps (100, 200) is made with an assembly of shape elements with profiled contours (110, 210), on which an envelope (120, 220) is tensioned.

15. The ship according to any one of claims 1 to 14, **characterized in that** at least one of the flaps (100, 200) is made with an assembly of generally rigid or semi-rigid boxes (130, 230) engaging telescopically with each other.
